# EUROPÄISCHE PATENTANMELDUNG

(11) **EP 2 099 009 A1**
(43) Veröffentlichungstag der Anmeldung: **09.09.2009**
(21) Anmeldenummer: 08152358.1
(22) Anmeldetag: 06.03.2008
(51) Int. Cl.: G09B 25/04

(54) **Gebäudemodell aus modularen Elemente**

(71) Anmelder: Berger, Philipp, 6207 Nottwil (SE)
(72) Erfinder: Berger, Philipp, 6207 Nottwil (SE)
(74) Vertreter: Scheuzger, Beat Otto

(57) **Zusammenfassung**

Es wird ein Modell von Gebäuden oder Gebäudeteilen beschrieben und beansprucht, das im Massstab 1:1, d.h. in natürlicher Grösse des Gebäudes, aus modularen Elementen erstellt ist und genau dem Grundriss der jeweiligen Etage folgt. Die einzelnen Elemente unterscheiden sich in ihrer Breite, die als ganzzahliger Multiplikator des Moduls (bevorzugt 10 cm) berechnet wird. Es wird jede Etage des Gebäudes für sich in einer Ebene als Modell aufgebaut. Bevorzugt bestehen alle Elemente, nämlich Wandelemente, Fensterelemente, Eckelemente und Pfeilerelemente, aus Leichtbauplatten. Die einzelnen Elemente werden durch Klammern, Klebstellen, Klebebänder, Verbindungsvorrichtungen mit Permanentmagneten oder bevorzugt durch Nut-Feder-Verbindungen, Spundung oder Schwalbenschwanz-Verbindungen miteinander vereinigt, wobei lösbare Verbindungen bevorzugt sind.

Die erfindungsgemässen Modelle vermitteln ein dimensionskonformes Abbild des Inneren des zukünftigen Gebäudes, insbesondere eines Einfamilienhauses, mit dem korrekten räumlichen Eindruck.

## Beschreibung

Die vorliegende Erfindung betrifft ein Gebäudemodell aus modularen Elementen nach dem Oberbegriff des Patentanspruches 1. Insbesondere bezieht sich die Erfindung auf das etagenweise erstellte Modell von Einfamilienhäusern.

Die in der folgenden Beschreibung gemachten Ausführungen betreffen vornehmlich Einfamilienhäuser. Die Erfindung ist jedoch nicht auf solche Gebäude beschränkt, sondern lässt sich ohne weiteres auch auf grössere Baulichkeiten anwenden, z.B. Mehrfamilienhäuser, Fabrikgebäude, Geschäftshäuser usw., aber auch auf kleinere Gebäude oder Nebengebäude wie beispielsweise Garagen, Gartenhäuser, Wärterhäuschen und andere.

Es ist bekannt, dass vor der Errichtung eines Gebäudes ausser den erforderlichen Bauplänen zuweilen auch Modelle dieser Gebäude erstellt werden, um denjenigen Personen, die am Erwerb, am Genehmigungsverfahren und an der Bauausführung interessiert bzw. beteiligt sind, einen dreidimensionalen Eindruck vom Gebäude zu vermitteln. Solche Modelle werden in einem Massstab verfertigt, der je nach der Grösse des Bauobjekts zwischen etwa 1:50 und 1:10 liegt. Als Baumaterialien dienen dabei in erster Linie Karton oder Pappe, daneben aber auch Kunststoffblätter, beispielsweise gefärbt und profiliert für Dächer oder transparent für Fenster. Diese bekannten Modelle gestatten es ebenfalls, Innenwände einzusetzen und das Dach sowie auch Stockwerke abzuheben, um eine noch bessere Einsicht in das zukünftige Gebäude zu ermöglichen.

Für manche Personen sind diese Modelle jedoch zu einer Beurteilung nicht ausreichend. Vielen Personen fehlt es am räumlichen Vorstellungsvermögen, so dass ein verkleinertes Modell nur ein Notbehelf ist, der nicht befriedigt. Auch kann ein solches verkleinertes Modell nur sehr bedingt dazu dienen, beispielsweise die Platzierung von Möbeln und Installationsarmaturen wie Wasserleitungen, Gasleitungen, Stromkabelrohren, Steckdosen, Telefonleitungen usw. an den richtigen Stellen, die dem zukünftigen Besitzer am besten passen, festzulegen.

Daher besteht ein Bedarf nach einem System, das es gestattet, diese Nachteile zu überwinden und dem Besitzer, aber auch dem Innenarchitekten und den Installateuren, eine genaue Vorstellung vom Bauwerk zu vermitteln, das erstellt werden soll.

Diese Aufgabe wird von der Erfindung durch ein Modell gelöst, das im kennzeichnenden Teil des Patentanspruchs 1 definiert ist. Besondere Ausführungsformen der Erfindung bilden den Gegenstand der abhängigen Ansprüche.

Die Erfindung erlaubt es, das betreffende Gebäude, oder auch nur einen Teil davon, so darzustellen, wie es später nach der Erstellung verwirklicht ist. Zukünftige Benutzer sind in der Lage, eine exakte Vorstellung vom Gebäude zu erhalten und die Einrichtung bereits nach ihren Wünschen oder Erfordernissen zu gestalten, die Möbel nach Bedarf oder nach ästhetischen Gesichtspunkten zu platzieren und gegebenenfalls noch die Grösse eines Raums oder die Anordnung von Türen und Fenstern zu ändern. Installateure können genaue Messungen der Platzierung von Leitungen, Rohren usw. vornehmen und die erforderlichen Längen ganz genau abmessen, was im blossen Grundriss nur durch Berechnung zugänglich ist. Steckdosen für Strom, Telefon und Fernsehen können schon am Modell an den am besten geeigneten Stellen angeordnet werden.

Bevorzugt werden die einzelnen Elemente, welche das Modell konform zum Grundriss bilden, unter Verwendung eines festen Moduls zur Verfügung gestellt. Unter dem Begriff "Modul" soll in diesem Dokument der Wert einer geringsten Breite des Elements verstanden werden, welcher dann mit einer kleinen ganzen Zahl multipliziert wird, um die Breite der anderen Elemente zu erhalten. Wählt man zum Beispiel - und dies ist bevorzugt - ein Modul von 10 cm, so werden Elemente gebaut und verwendet, die eine Breite von 10 cm, 20 cm, 30 cm, ... 100 cm und mehr haben. Zur Verwirklichung von Zwischenlängen kann noch mindestens ein Ausgleichselement vorgesehen werden, beispielsweise ein Element mit einer Breite von 5 cm (= ½ Modul).

Bevorzugt haben alle Elemente die gleiche Dicke, und als Kompromiss aus Masse und Stabilität der Elemente hat sich eine Dicke von 10 cm gut bewährt.

Als Höhe der Elemente wird im Allgemeinen die Normhöhe einer Etage gewählt, d.h. 240 cm. Wandelemente, die anstelle von Fenstern eingesetzt werden und die Breite von Fenstern oder Glasfronten haben, besitzen beispielsweise die oben angegebenen modularen Längen und dabei eine Höhe von jeweils 1,00 m.

Die einzelnen Elemente werden bevorzugt aus Materialien hergestellt, die möglichst leicht, aber ausreichend dimensionsstabil sind. Platten aus geschäumtem Polyolefin (Styropor®) werden zurzeit bevorzugt. Es kommen aber auch Platten in Betracht, die von Rahmen, beispielsweise aus leichtem Holz, gebildet werden und die dann mit einem gewebten oder nichtgewebten Textilmaterial bespannt oder mit Kunststoff- oder Kartonplatten bedeckt sind. Die Rahmen sollten dann Verstärkungen aufweisen. Die Herstellung und die Eigenschaften solcher Leichtbauplatten sind grundsätzlich bekannt.

Um eine durchgehende, stabile Wand zu bilden, müssen die einzelnen Elemente miteinander verbunden werden. Dies geschieht zunächst an den senkrecht verlaufenden Stossstellen zwischen je zwei Elementen. Eine solche Verbindung kann durch Kleben oder Verschweissen hergestellt werden, wodurch zwei anstossende Elemente fest miteinander vereinigt werden. Es ist auch möglich, die beiden anstossenden Elemente mit Klammern miteinander zu verbinden; Geräte zum Einsetzen von Klammern sind in der Bautechnik gut bekannt. Um eine gute Verklammerung zu erreichen, sollten die Randbereiche der Elemente verstärkt werden, beispielsweise durch Anbringen schmaler Latten, die im Material der Elemente versenkt werden sollten.

Wenn die Elemente jedoch später erneut verwendet werden sollen, muss die Verbindung lösbar gestaltet werden. Dies geschieht beispielsweise dadurch, dass die Stosslinie der beiden zu vereinigenden Elemente mit einem Klebeband überzogen wird, das sich über die Randbereiche beidseits der Stosslinie erstreckt. Ein solches Klebeband sollte dann zur Erzielung einer ausreichenden Stabilität der Verbindung innen und aussen an den Elementen angebracht werden. Anstelle von Klebebändern können auch andere, analog wirkende Verbindungsmaterialien verwendet werden.

Da die Verwendung von Klebebändern wenig ästhetisch ist, wird eine bessere Lösung darin gesehen, die aneinanderstossenden Elemente mit einem Verbindungsprofil zu versehen. Vor allem zwei Arten von Verbindungsprofilen werden als besonders geeignet angesehen, nämlich das Schwalbenschwanzprofil und die Verbindung über Nut und Feder, auch als Spundung bezeichnet. Näheres über verwendbare Verbindungen findet sich z.B. unter dem Stichwort "Verbindungstechnik" im Internet-Lexikon Wikipedia (http://de.wikipedia.org). Das Schwalbenschwanzprofil ergibt eine solidere Verbindung der Elemente, bedingt aber ein Einschieben eines Elements in das andere, was beim Hinzufügen eines weiteren Elements in eine bereits aufgerichtete Wand aus mehreren Elementen schwierig ist und ein Anheben des neuen Wandelements auf die Normhöhe von 2,40 m verlangt.

Daher wird gegenwärtig eine Nut-Feder-Verbindung bevorzugt, wobei die Feder auch als gesondertes Bauteil vorliegen kann und die Elemente in diesem Fall auf beiden Längsseiten mit einer Nut versehen sind. Diese Ausführung mit getrennter Feder bietet den Vorteil, dass alle Elemente auf beiden Längsseiten das gleiche Profil aufweisen, was die Herstellung vereinfacht. Die getrennte Feder braucht nicht eingeklebt oder anderweitig für dauernd in eine oder beide Nuten eingesetzt zu werden; es genügen kleine Halteelement wie beispielsweise Widerhaken auf der Feder und/oder in der Nut.

Eine Nut kann aber auch zusätzlich auf einer horizontalen Schmalseite der Elemente oder auf den beiden Seitenflächen angebracht werden, wodurch es möglich wird, eine oder zwei horizontale Federn zu verwenden, d.h. je eine Feder horizontal am Boden verlegt und eine weitere Feder als Abschluss horizontal am oberen Ende der Elemente. Diese Federn werden z.B. von je einer Leiste gebildet, die in der Nut befestigt ist und über mindestens zwei, in der Regel aber über alle Elemente der betreffenden Wand verläuft. Dies erhöht die Stabilität des Modells bedeutend. Auch bei anderen Verbindungsarten ist eine obere horizontale Verbindung der Elemente bevorzugt, um die Stabilität der Wände zu erhöhen, beispielsweise durch eine aufgesetzte Kappe mit umgekehrtem U-Profil, die mindestens im Bereich der Verbindungsstelle zweier Elemente oder aber längs der gesamten Wand auf die Elemente aufgesetzt ist.

Die in aller Regel vorhandenen Querwände sichern die Stabilität einer aufgerichteten Wand und verhindern ein Umfallen. Bei Teilmodellen wird es erforderlich sein, an sich bekannte Mittel zur Sicherung einer Wand gegen Umfallen einzusetzen; auf eine Beschreibung dieser bekannten Mittel soll hier verzichtet werden, sie sind dem Fachmann geläufig.

Eine weitere Möglichkeit der Verbindung von Elementen besteht darin, diese Elemente an ihren aneinanderstossenden Seitenflächen über magnetische Vorrichtungen lösbar miteinander zu verbinden; solche Vorrichtungen können permanentmagnetische Folien, Plättchen, Stäbe, Scheiben oder andere sein. Als haltendes Gegenelement kann ebenfalls eine permanentmagnetische Vorrichtung (mit jeweils entgegengesetzter Polarität) oder, was einfacher ist, ein ferromagnetisches Organ dienen. Magnetische Vorrichtungen können auch zum Befestigen der Elemente am Boden und zum provisorischen Platzieren von Steckdosen an einem Wandelement dienen.

Im Folgenden sollen nun Ausführungsbeispiele des Erfindungsgegenstands dargestellt und erläutert werden. In der Beschreibung dieser Beispiele wird auf die Figuren der anhängenden Zeichnungen verwiesen. Darin stellen dar:
Fig. 1 eine perspektivische Ansicht eines zweistöckigen Einfamilienhauses,
Fig. 2 den Grundriss des Erdgeschosses des Hauses gemäss Fig. 1 im Massstab 1:100,
Fig. 3 den Grundriss des Obergeschosses des Hauses gemäss Fig. 1 im Massstab 1:100,
Fig. 4 eine perspektivische Ansicht des aus erfindungsgemässen Elementen im Massstab 1:1 aufgebauten Erdgeschosses des Hauses gemäss Fig. 1 und 2, seitlich von oben gesehen,

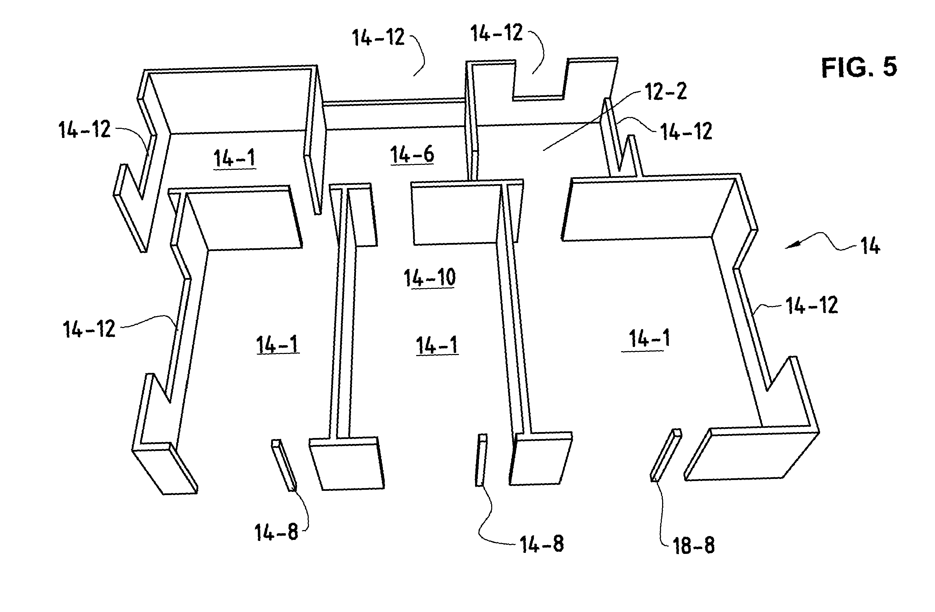

Fig. 5 eine perspektivische Ansicht des aus erfindungsgemässen Elementen im Massstab 1:1 aufgebauten Obergeschosses des Hauses gemäss Fig. 1 und 3, seitlich von oben gesehen,
Fig. 6 eine Draufsicht des Erdgeschoss-Modells 1:1 des Hauses gemäss Fig. 1 und 2,
Fig. 7 eine Draufsicht des Obergeschoss-Modells 1:1 des Hauses gemäss Fig. 1 und 2,
Fig. 8 eine vergrösserte Ansicht des Ausschnitts V-8 in Fig. 6,
Fig. 9 eine Variante der in Fig. 8 gezeigten Anordnung mit anderen Verbindungselementen, und
Fig. 10 einen senkrechten Längsschnitt eines aufgestellten Elements in der Schnittebene IX-IX in Fig. 8.

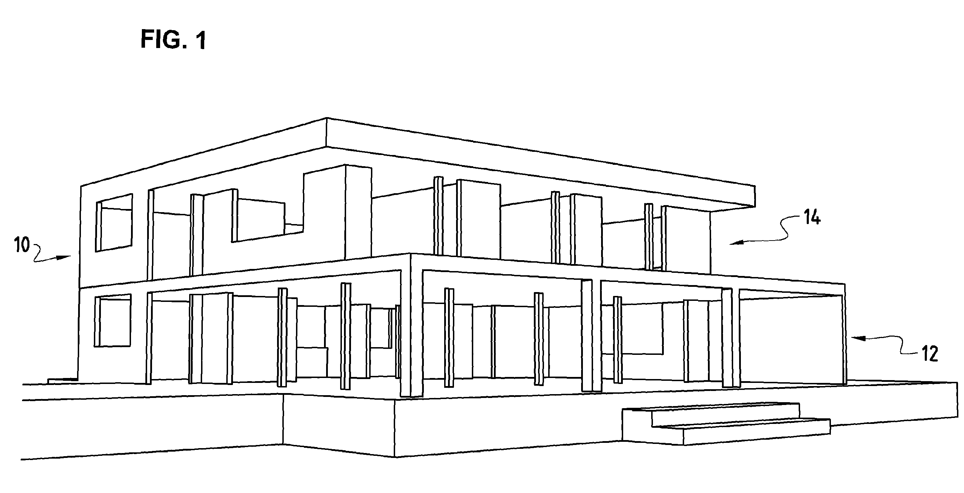

In Fig. 1 ist ein Einfamilienhaus 10, bestehend aus Erdgeschoss 12 und Obergeschoss 14, als verkleinertes, in seiner Art an sich bekanntes Modell in perspektivischer Ansicht dargestellt, wobei angenommen ist, dass das Haus bereits fertig gebaut ist. Wie leicht ersichtlich ist, kann das Modell nicht begangen werden, und das Innere des Hauses bleibt in manchen Teilen dem Blick verborgen - es sei denn, es handelt sich um ein Modell, bei dem das Dach und das Obergeschoss abnehmbar sind.

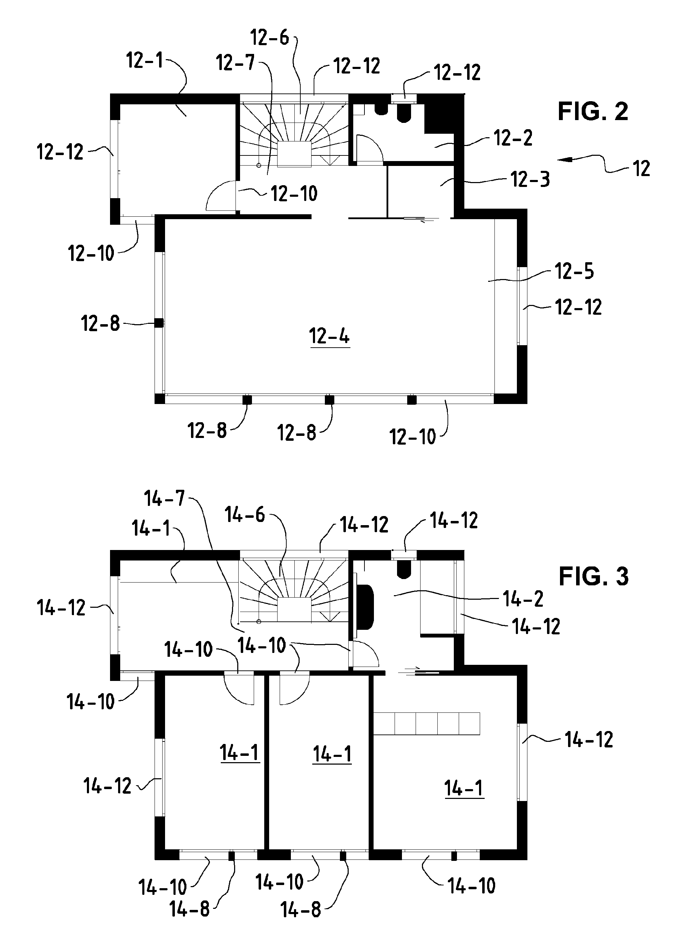

Der Grundriss des Erdgeschosses 12 in Fig. 2 zeigt, dass ein Zimmer 12-1, ein Sanitärraum 12-2 mit Dusche und WC, ein Abstellraum 12-3 und ein grosses Wohn/Esszimmer 12-4 mit "amerikanischer" Küche 12-5 vorgesehen sind. Zum Obergeschoss 14 führt eine Treppe 12-6, die nach Durchschreiten eines Vorraums 12-7 zugänglich ist. Türen und bis zum Boden reichende Glaswände sind mit 12-10 und Fenster mit 12-12 bezeichnet. Die Pfeiler der Glaswände tragen das Bezugszeichen 12-8.

In Fig. 3 ist der Grundriss des Obergeschosses 14 angegeben. Die verwendeten Bezugszeichen und Gegenstände entsprechen denjenigen von Fig. 2, ausser dass die führende 12 durch eine 14 ersetzt ist. Im Obergeschoss, das über die Treppe 14-6 zugänglich ist, befinden sich vier Zimmer 14-1, ein Vorraum 14-7 und ein Badezimmer 14-2.

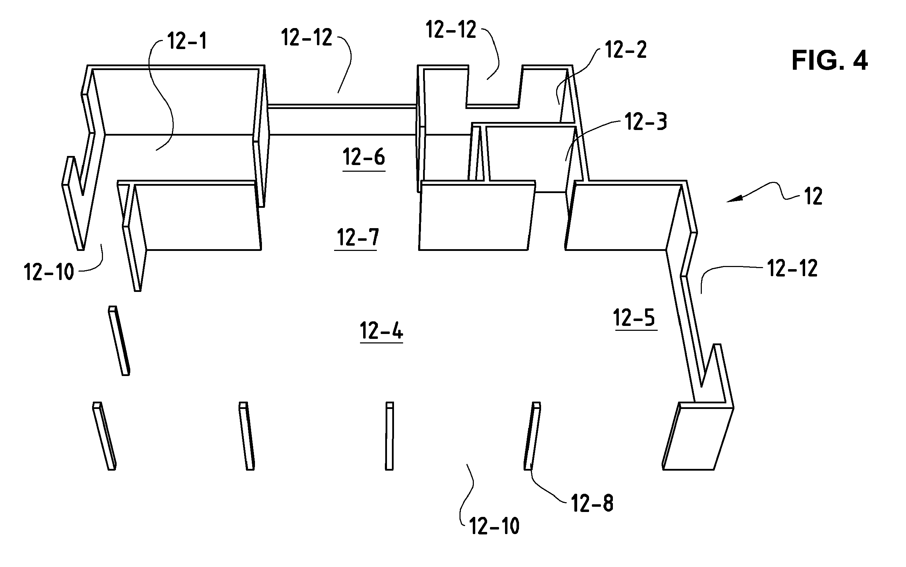

Fig. 4 stellt nun in perspektivischer Ansicht von vorn und oben das Modell des Erdgeschosses des Einfamilienhauses gemäss den Fig. 1 und 2 dar, welches erfindungsgemäss im Massstab 1:1 aus Elementen, insbesondere wiederverwendbaren Elementen, aufgebaut wurde. Sämtliche Türen sind durch die Abwesenheit von Elementen, also als senkrecht durchgehende Öffnungen, verwirklicht, und alle Fenster werden von Elementen gebildet, deren Höhe gegenüber den Wandelementen vermindert ist. Im gezeigten Beispiel haben die Wandelemente eine Höhe von 2,40 m und alle Fensterelemente eine solche von 1,00 m. Die einzelnen Räume, Türen, Fenster usw. sind in Fig. 4 mit den gleichen Bezugszeichen versehen wie in Fig. 2.

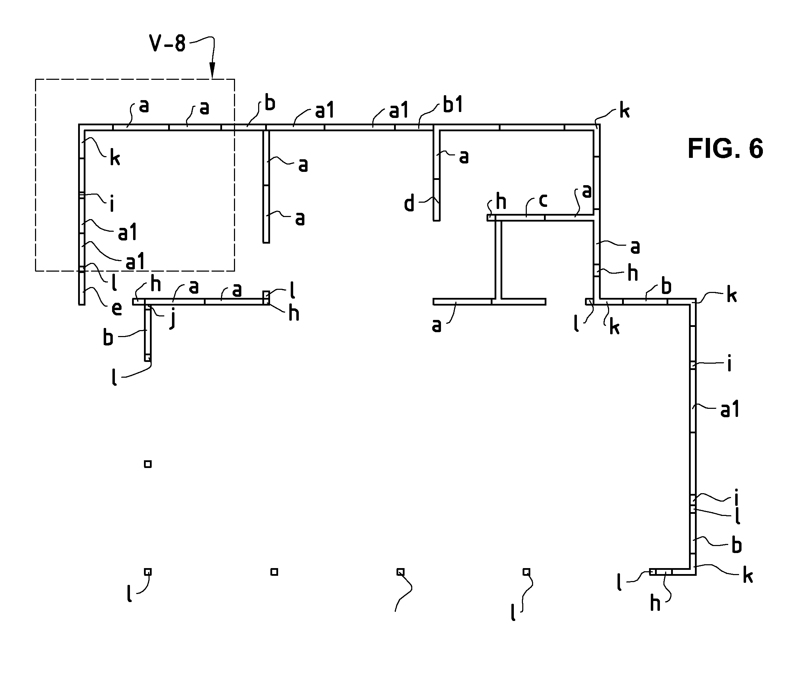

Es wird nun auf Fig. 6 verwiesen, die eine Draufsicht des erfindungsgemässen Erdgeschoss-Modells 1:1 des Hauses gemäss Fig. 1 und 2 zeigt; aus dieser Figur geht nun hervor, in welcher Anordnung die einzelnen Elemente aneinandergereiht sind.

Bei der dimensionsgemässen Auslegung der Elemente wurde bei den hier vorgestellten Beispielen zunächst die Höhe der Elemente festgelegt. Alle Wandelemente haben eine Höhe von 2,40 m, die der Höhe normaler Zimmer entspricht. Dadurch entsteht sofort der natürliche Eindruck, den das Modell vermitteln soll. Alle Fensterelemente haben der Einfachheit halber eine einheitliche Höhe von 1,00 m, auch wenn es sich um eher hoch angebrachte Fensteröffnungen (wie z.B. in Badezimmern) handelt. Es ist auch möglich, andere oder zusätzliche Fensterelemente vorzusehen, was natürlich die Lagerhaltung kompliziert.

Als Breitenmodul der Elemente wurden 10 cm festgelegt; damit lassen sich alle Breiten darstellen, die ohne Rest durch 10 teilbar sind. Zum Ausgleich eventueller Abweichungen kann noch ein Ausgleichselement mit einer Breite von 5 cm vorgesehen werden. In diesem Beispiel ist ein Element mit einer Breite von 90 cm ausgelassen.

Die Abmessungen der zur Verfügung gestellten Elemente, sämtlich mit einer Dicke von 10 cm in diesen Beispielen, gehen aus der folgenden Tabelle hervor.

**Tabelle der Elemente**

| Zeichen | Breite, cm | Höhe, cm | Bezeichnung |
|---|---|---|---|
| a | 100 | 240 | Wandelement |
| b | 80 | " | " |
| c | 70 | " | " |
| d | 60 | " | " |
| e | 50 | " | " |
| f | 40 | " | " |
| g | 30 | " | " |
| h | 20 | " | " |
| i | 10 | " | " |
| j | 5 | " | Ausgleichselement |
| k | 2 x 50 | " | Eckelement |
| l | 10 | " | Pfeilerelement |
| a1 | 100 | 100 | Fensterelement |
| b1 | 80 | " | " |
| c1 | 70 | " | " |
| d1 | 60 | " | " |
| e1 | 50 | " | " |
| f1 | 40 | " | " |
| g1 | 30 | " | " |
| h1 | 20 | " | " |
| i1 | 10 | " | " |
| j1 | 5 | " | Fenster-Ausgleichselement |
| k1 | 2 x 50 | " | Fenster-Eckelement |

Die einzelnen Elemente sind in Übereinstimmung mit der obigen Masstabelle bezeichnet. Dabei sind nicht alle Elemente mit Bezugszeichen versehen, um die Übersichtlichkeit zu wahren.

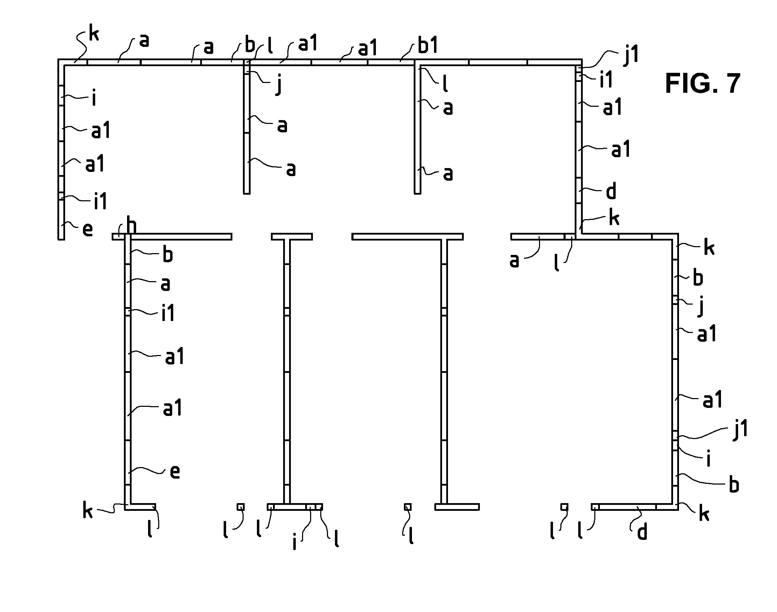

Fig. 7 zeigt nun in analoger Darstellung wie Fig. 6 eine Draufsicht des erfindungsgemässen Obergeschoss-Modells 1:1 des Hauses gemäss Fig. 1 und 3; aus dieser Figur geht hervor, in welcher Anordnung die einzelnen Elemente aneinandergereiht sind. Dabei sind der guten Übersicht halber nicht alle Elemente mit einem Bezugszeichen versehen. Das Modell des Obergeschosses wird aus Stabilitäts- und Kostengründen normalerweise nicht über demjenigen des Erdgeschosses aufgebaut, sondern in der Regel auf der gleichen Ebene wie letzteres. Es ist aber auch möglich, die beiden Modelle höhenversetzt auf unterschiedlichen Niveaus nach Art einer zweistufigen Treppe anzuordnen, was die Naturtreue der Modelle stark erhöht.

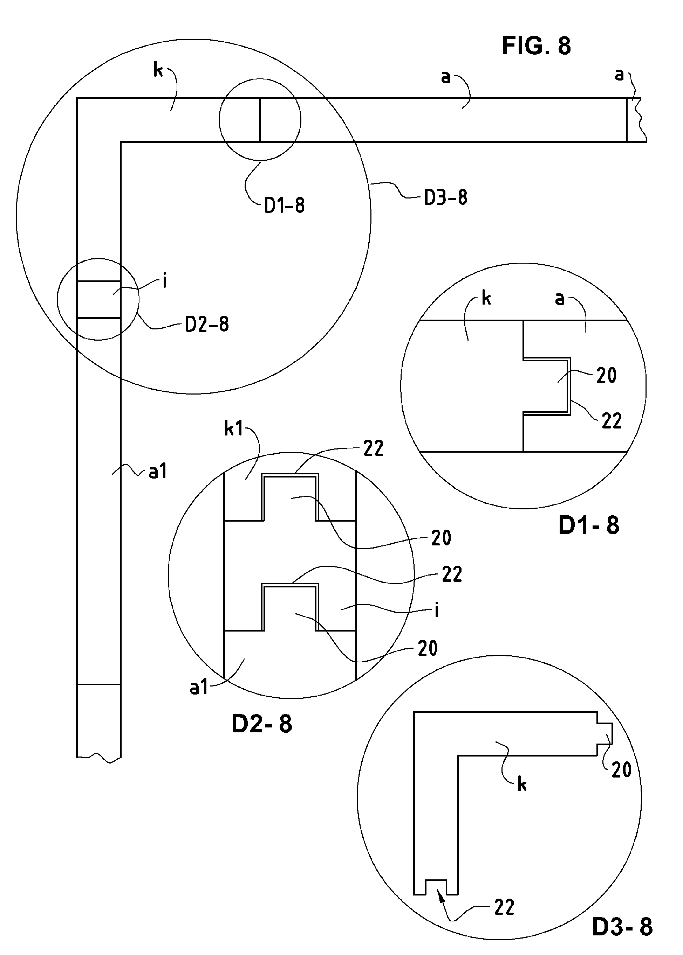

In Fig. 8 ist zur Veranschaulichung der Verbindung zwischen den einzelnen Elementen eine vergrösserte Ansicht des Ausschnittes V-8 in Fig. 6 dargestellt. Es handelt sich um die linke obere Ecke des Erdgeschossmodells. Dieser Ausschnitt weist seinerseits wieder drei vergrösserte Detailansichten D1-8, D2-8 und D3-8 auf.

Das Detail D1-8 zeigt das rechte Ende des Eckelements k und das anschliessende Wandelement a. Das Eckelement k, das als Ganzes im Detail D3-8 gezeigt ist, weist an der einen vertikalen Seite einen Vorsprung 20 auf, der das positive Verbindungsteil darstellt, und auf der anderen Seite das negative Verbindungsteil 22. In der Regel verlaufen die beiden Verbindungsteile 20, 22 über die ganze Länge des Elements von oben nach unten, wobei es aber auch möglich ist, bestimmte Bereiche auszusparen, beispielsweise an den Enden.

Im Detail D2-8 ist die Fortsetzung des Eckelements nach vorn (in Fig. 1) bzw. nach unten (in Fig. 6 und 8) gezeigt. Wieder ist das eine Ende des Eckelements k mit seiner Nut 22 zu sehen, in die die Feder 20 des Elements i eingreift. Auf der anderen Seite besitzt das Element i eine Nut 22, in die dann die Feder 20 des nächsten Elements eingesetzt ist, nämlich eines Fensterelements a1.

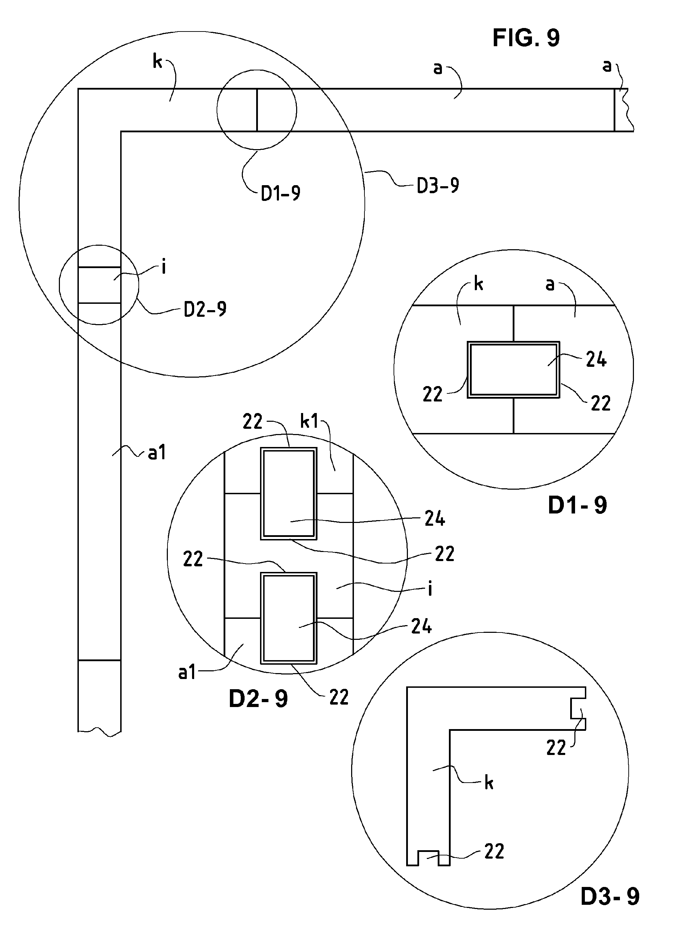

Diese Art der Verbindung zweier Elemente ist sehr zweckentsprechend und weist nur einen kleinen Nachteil auf, dass nämlich Nut oder Feder sichtbar sind, wenn Pfeilerelemente I frei stehen oder wenn Fensterelemente mit Wandelementen kombiniert sind, sowie am Ende einer Wand. Die Ausbildung nach Fig. 9 behebt diesen Nachteil, indem alle Elemente mit Nuten versehen sind und die Federn getrennt vorliegen. So zeigt Fig. 9, welche bis auf diese Abweichung in allen anderen Teilen der Fig. 8 gleicht, dass alle Wandelemente, Fensterelemente und auch die Pfeilerelemente nur Nuten 22 besitzen. Anstossende Elemente werden mit Hilfe der eingesetzten Federn 24, die die Form von Leisten haben und deren Breite etwas weniger als die doppelte Tiefe der Nuten 22 beträgt, miteinander verbunden. In frei liegende Nuten, wie sie bei frei stehenden Pfeilern I und bei der Verbindung von Wandmit Fensterelementen sowie am Ende von Wänden auftreten, werden Leisten eingesetzt, welche die Abmessungen der Nuten besitzen, so dass die entsprechende Fläche wieder glatt und ohne Ausnehmungen erscheint.

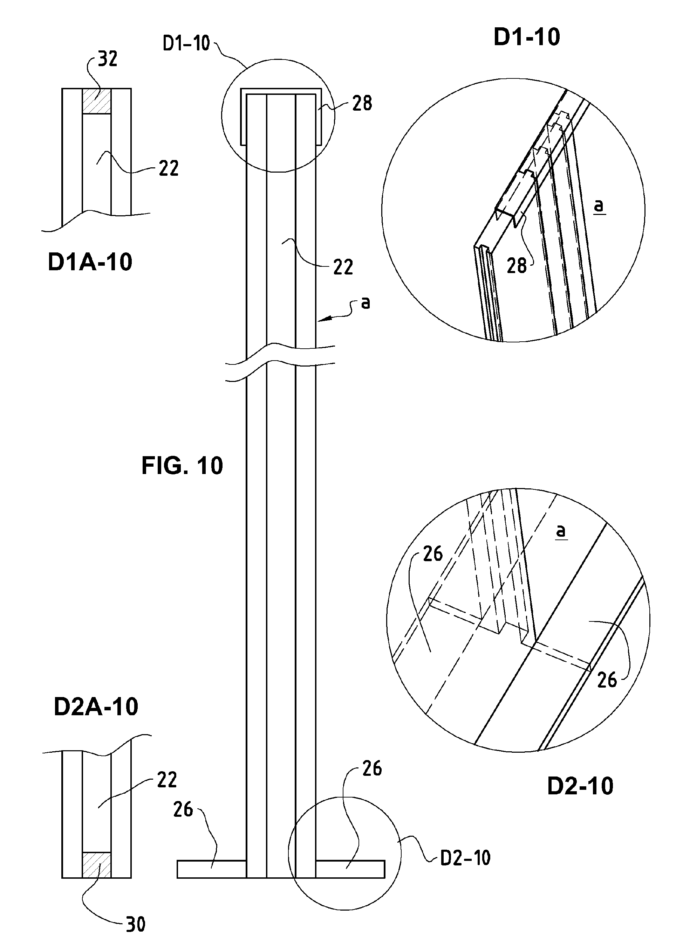

Schliesslich zeigt Fig. 10, wie die Elemente am Boden verankert werden und wie deren gegenseitige Verbindung am oberen Ende der Elemente zusätzlich verstärkt werden kann.

Die Elemente gemäss der Ausführungsform nach Fig. 8 werden auf der Montageebene mit Spannung zwischen Begrenzungsleisten 26 eingesetzt, die zuvor auf der Montageebene fest angebracht wurden. Einzelheiten lassen sich aus dem Detail D2-10 entnehmen. Die oberen Endbereiche der Elemente werden mit einem U-Profil 28 miteinander verbunden, das aufgeklemmt oder anderweitig solide befestigt wird. Einzelheiten gehen aus dem Detail D1-10 hervor.

Bei Anwendung der Ausführungsform gemäss Fig. 9 weisen die Elemente eine untere waagerechte Nut auf, in die eine Befestigungsleiste 30 eingreifen kann, siehe das Detail D2A-10. Im oberen Endbereich besitzen die Wandelemente eine weitere waagerechte Nut, welche obere Abschlussleisten 32 (siehe Detail D1A-10) aufnehmen kann.

Es soll nun noch kurz der Aufbau eines Modells beschrieben werden.

Als erstes wird eine ausreichend grosse ebene Fläche vorbereitet, am besten in einer Halle, um das Modell vor Witterungseinflüssen zu schützen. Dann wird der Grundriss einer Etage auf dieser Ebene aufgezeichnet. Danach werden die entsprechenden einzelnen Elemente durch Berechnung und Kombination festgelegt und deren Bezeichnung auf der Ebene notiert. Nun werden die Bodenbefestigungen an Ort und Stelle verankert, nämlich beispielsweise die Begrenzungsleisten 26 oder die unteren Befestigungsleisten 30. Dann können die einzelnen Elemente eingesetzt und miteinander verbunden werden. Wenn Befestigungsleisten 30 verwendet werden, greift jedes Element mit seiner waagerechten Bodennut über diese Befestigungsleiste 30. Nach Einsetzen jedes Elements wird eine Federleiste 24 in der frei liegenden Endnut 22 befestigt, worauf das nächste Element angebaut werden kann. Am Schluss werden Abschlussleisten in frei liegende vertikale Nuten eingelegt und dort befestigt, und die oberen Endbereiche der Elemente werden durch U-Profile 28 oder durch Abschlussleisten 32 fest miteinander verankert.

Die Elemente können mit einem Anstrich versehen werden. Leitungen, Steckdosen, Lampen und andere Beleuchtungskörper sowie sonstige an der Wand zu befestigende Elemente können angezeichnet oder als Kennobjekte an der Wand angebracht werden, z.B. mittels Magnetbefestigungen.

Die vorliegende Erfindung ist auf die gezeigten und beschriebenen Beispiele und die Abmessungen der Elemente nicht eingeschränkt. Vielmehr kann der Fachmann nach seinem Wissen und Können im Rahmen des Geltungsbereichs der Erfindung, der durch die Patentansprüche definiert ist, Änderungen anbringen und Weiterentwicklungen vornehmen, die sodann von der Erfindung umfasst werden.

## Patentansprüche

1. Gebäudemodell zur räumlichen Veranschaulichung eines Gebäudes oder Teilen davon, wobei das Modell im wesentlichen den gleichen Grundriss wie das Gebäude bzw. des Gebäudeteils aufweist, **dadurch gekennzeichnet, dass** das Modell im Massstab von annähernd oder genau 1:1 erstellt ist, bezogen auf das modellierte Gebäude bzw. den Gebäudeteil, dass das Modell modular aus Elementen zusammengesetzt ist, die sich beliebig kombinieren lassen, und dass jeweils ein Stockwerk des modellierten Gebäudes auf einer Ebene aufgebaut ist.

2. Gebäudemodell nach Anspruch 1, **dadurch gekennzeichnet, dass** zwei Elementgruppen vorgesehen sind, wobei Wand- und Eckelemente eine Höhe von 2,40 m und Fensterelemente eine Höhe von 1,00 m aufweisen.

3. Gebäudemodell nach Anspruch 1 oder 2, **dadurch gekennzeichnet, dass** sich sämtliche Wandlängen mit einem Breitenmodul der Elemente von 0,10 m darstellen lassen, wobei ein weiteres Element mit einer Breite von 0,05 m sowie mindestens ein Eckelement vorgesehen sind.

4. Gebäudemodell nach einem der vorstehenden Ansprüche, **dadurch gekennzeichnet, dass** die Elemente in Leichtbauweise hergestellt sind.

5. Gebäudemodell nach Anspruch 4, **dadurch gekennzeichnet, dass** die Elemente aus geschäumtem Polyolefin bestehen.

6. Gebäudemodell nach Anspruch 4, **dadurch gekennzeichnet, dass** die Elemente hohl ausgeführt sind.

7. Gebäudemodell nach einem der vorstehenden Ansprüche, **dadurch gekennzeichnet, dass** die Elemente durch Kleben, Schweissen der Verklammern miteinander verbunden sind.

8. Gebäudemodell nach einem der vorstehenden Ansprüche, **dadurch gekennzeichnet, dass** die Elemente durch magnetische Verbindungselemente miteinander verbunden und wiederverwendbar sind.

9. Gebäudemodell nach einem der Ansprüche 1 bis 7, **dadurch gekennzeichnet, dass** die Elemente durch mechanische Verbindungselemente, insbesondere Steckverbindungen, miteinander verbunden und wiederverwendbar sind.

10. Gebäudemodell nach einem der vorstehenden Ansprüche, **dadurch gekennzeichnet, dass** die Elemente an den Verbindungsstellen mit den jeweils benachbarten Elementen einander entsprechende Einsatzprofile aufweisen.

11. Gebäudemodell nach Anspruch 10, **dadurch gekennzeichnet, dass** die Verbindung von je zwei benachbarten Elementen durch eine Nut-Feder-Verbindung oder durch Spundung verwirklicht ist.

12. Gebäudemodell nach Anspruch 10, **dadurch gekennzeichnet, dass** die Verbindung von je zwei benachbarten Elementen durch eine Schwalbenschwanz-Verbindung verwirklicht ist.

13. Gebäudemodell nach einem der vorstehenden Ansprüche, **dadurch gekennzeichnet, dass** die Elemente an ihren oberen und/oder unteren horizontalen Endflächen mit einer horizontal verlaufenden Nut versehen sind, in der eine horizontal liegende, sich über mindestens zwei Elemente erstreckende Leiste zur Ausbildung einer Nut-Feder-Verbindung befestigt ist.

14. Gebäudemodell nach einem der vorstehenden Ansprüche, **dadurch gekennzeichnet, dass** das Material der Elemente an den Randbereichen zu einem benachbarten Element, insbesondere an den Bereichen der Einsatzprofile, verstärkt ist.

15. Gebäudemodell nach einem der vorstehenden Ansprüche, **dadurch gekennzeichnet, dass** die Elemente ebene Flächen aufweisen, überall die gleiche Dicke aufweisen und im Wesentlichen prismatisch geformt sind.
